# EUROPEAN PATENT APPLICATION

(11) **EP 1 853 002 A1**
(43) Date of publication of application: **07.11.2007**
(21) Application number: 06775258.4
(22) Date of filing: 01.08.2006
(51) Int. Cl.: H04L 12/24

(54) **METHOD OF NETWORK MANAGEMENT SYSTEM INTERFACE NEGOTIATION AND APPARATUS THEREOF**

(30) Priority: 11.08.2005 CN 200510091232
(71) Applicant: Huawei Technologies Co Ltd, Longgang District Shenzhen 518129 (CN)
(72) Inventor: YANG, Li, Shenzhen, Guangdong518129 (CN); ZOU, Lan, Shenzhen Guangdong518129 (CN)
(74) Representative: Körber, Martin Hans
(86) International application number: PCT/CN2006/001926
(87) International publication number: WO 2007/016858

(57) **Abstract**

A method for interface negotiation in a Network Management System (NMS) is disclosed. The method includes: sending by a sending party in an NMS Integration Reference Point (IRP) version information supported by the sending party to a receiving party in the NMS; and acquiring by the receiving party matching IRP version information based on IRP version information supported by the receiving party and the IRP version information supported by the sending party. Another method for interface negotiation and apparatuses for interface negotiation in an NMS are disclosed as well. The matching IRP version information can match functional interface IRP, data definition IRP and NRM IRP of a managing unit with those of a managed unit, thus guaranteeing correct interaction between the managing unit and the managed unit, and greatly reducing the influence on the whole NMS after the network is partly updated.

## Description

### Field of the Invention

The present invention relates to network management technologies, and more particularly, to a method and apparatuses for interface negotiation in a network management system.

### Background of the Invention

A typical/conventional Network Management System (NMS) includes two logical entities: a managing unit and a managed unit. The managing unit and managed unit intercommunicate with each other via an interaction interface. With the extension of the NMS and its functions, the relationship between the managing unit and the managed unit becomes more and more complicated. There can be a multi-level management relationship between the managing unit and the managed unit, and/or a management relationship between multiple managing units and multiple managed units.

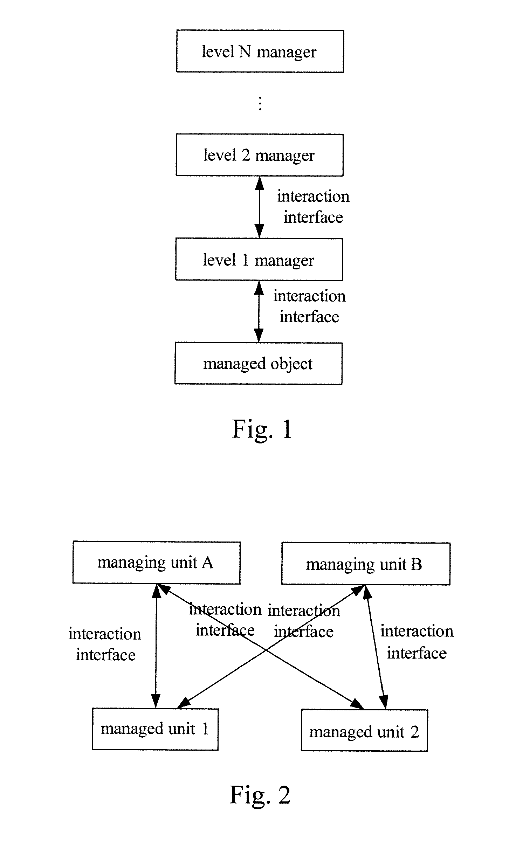

With reference to Figure 1, the multi-level management relationship includes a managed object, a level 1 manager, a level 2 manager, ..., and a level N manager. The managed object may be a network element system; the level 1 manager may be a Network Element Management System (EMS); the level 2 manager may be the NMS; while the level N manager may be a multi-level upper-class NMS which is cascaded. In the multi-level management relationship shown in Figure 1, the level 1 manager, the level 2 manager, ..., and the level N manager each can serve as a managing unit; and the managed object or the manager with the lower level corresponding to the managing unit can serve as the corresponding managed unit. Figure 2 shows a management relationship between multiple managing units and multiple managed units. With reference to Figure 2, managing unit A and managing unit B manage respectively but simultaneously two managed units: managed unit 1 and managed unit 2. Managed unit 1 and managed unit 2 are respectively managed by managing unit A and managing unit B. It can be seen from the above management relationship that, either the EMS or NMS can serve as a managing unit, while either the network element system or EMS can serve as the corresponding managed unit.

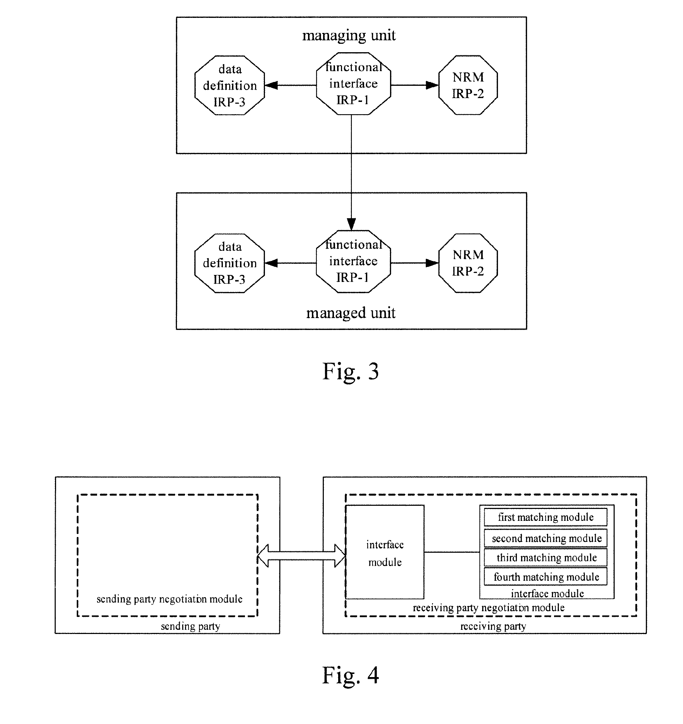

The interface between the managing unit and the managed unit includes a functional interface Integration Reference Point (IRP), or further includes a data definition IRP or a Network Resource Model (NRM) IRP. The functional interface IRP can call at least one data definition IRP or at least one NRM IRP. In other words, the functional interface IRP can be associated with at least one data definition IRP or at least one NRM IRP. Figure 3 is a schematic diagram illustrating an IRP relationship between a managing unit and a managed unit. As shown in Figure 3, the managing unit supports a functional interface IRP-1, an NRM IRP-2 and a data definition IRP-3. The functional interface IRP-1 of the managing unit supports calling some versions of NRM IRP-2 and data definition IRP-3. In other words, there are a calling relationship between the functional interface IRP-1 version and the NRM IRP-2 version and a calling relationship between the functional interface IRP-1 version and the data definition IRP-3 version. The managed unit supports the functional interface IRP-1, the NRM IRP-2 and the data definition IRP-3. The functional interface IRP-1 of the managed unit supports calling some versions of NRM IRP-2 and data definition IRP-3. In other words, there are a calling relationship between the functional interface IRP-1 version and the NRM IRP-2 version and a calling relationship between the functional interface IRP-1 version the data definition IRP-3 version.

Along with the gradual extension of the network, the interface between the managing unit and the managed unit becomes more and more complicated. Moreover, the managing unit and managed unit may need updating according to using requirements, when used by a network operator. Accordingly, it is a crucial technical question about how to acquire matching IRP version information between the managing unit and managed unit, and how to use the matching IRP correctly to implement interaction operations between the managing unit and managed unit after the managing unit and managed unit are updated.

### Summary of the Invention

The present invention provides methods and apparatuses for interface negotiation in a Network Management System (NMS) to match the Integration Reference Point (IRP) of the managing unit and the IRP of the managed unit.

The present invention provides a method for interface negotiation in an NMS, the method includes: sending, by the sending party in an NMS, IRP version information supported by the sending party to a receiving party in the NMS; and acquiring, by the receiving party, matching IRP version information based on IRP version information supported by the receiving party and the IRP version information supported by the sending party.

Optionally, the sending party is a managed unit, and the receiving party is a managing unit.

Optionally, the sending party is a managing unit and the receiving party is a managed unit.

Optionally, the IRP version information supported by the sending party includes functional interface IRP version information; and the IRP version information supported by the managing unit includes functional interface IRP version information.

Optionally, the IRP version information supported by the managed unit further includes data definition IRP version information; and the IRP version information supported by the managed unit further includes data definition IRP version information.

Optionally, the IRP version information supported by the managed unit further includes Network Resource Model (NRM) IRP version information; and the IRP version information supported by the managing unit further includes NRM IRP version information.

Optionally, the method further includes: acquiring, by the receiving party, the matching IRP version information by comparing the IRP version information supported by the receiving party and the IRP version information supported by the sending party based on a pre-set matching principle.

Optionally, the method further includes: sending, by the managing unit, a version negotiation instruction to the managed unit; and sending, by the managed unit, the IRP version information supported by the sending party to the managing unit.

Optionally, the method further includes: sending, by the managed unit, at least one IRP version information supported by the managed unit to the managing unit simultaneously.

Optionally, the method further includes: sending, by the managing unit, the IRP version information supported by the managing unit to the managed unit via a version negotiation instruction.

Optionally, the method further includes: sending, by the managed unit, the matching IRP version information to the managing unit.

The present invention further provides an apparatus for interface negotiation in an NMS, the apparatus includes: a sending party negotiation module located in a sending party in an NMS, the sending party negotiation module being configured to send IRP version information supported by the sending party to a receiving party in the NMS; and a receiving party negotiation module located in the receiving party, the receiving party negotiation module being configured to receive the IRP version information supported and sent by the sending party and acquire matching IRP version information based on IRP version information supported by the receiving party and the IRP version information supported by the sending party.

Optionally, the sending party is a managing unit, and the receiving party is a managed unit.

Optionally, the sending party is a managed unit, and the receiving party is a managing unit.

Optionally, the receiving party negotiation module includes an interface module and a matching module; the interface module is configured to receive the IRP version information supported and sent by the sending party and forward the received IRP version information supported by the sending party to the matching module; the matching module is configured to receive the IRP version information supported by the sending party from the interface module, and acquire the matching IRP version information based on IRP version information supported by the receiving party and the IRP version information supported by the sending party.

Optionally, the matching module includes a first matching module, configured to acquire the IRP version information, based on functional interface IRP version information supported by the receiving party and the functional interface IRP version information supported by the sending party.

Optionally, the matching module includes a second matching module, configured to acquire the matched IRP version information based on the functional interface IRP version information and data definition IRP version information supported by the receiving party, and the functional interface IRP version information and the data definition IRP version information supported by the sending party.

Optionally, the matching module includes a third matching module, configured to acquire the matched IRP version information based on the functional interface IRP version information and NRM IRP version information supported by the receiving party, and the functional interface IRP version information and the NRM IRP version information supported by the sending party.

Optionally, the matching module includes a fourth matching module, configured to acquire the matched IRP version information based on the functional interface IRP version information, the data definition IRP version information, and the NRM IRP version information supported by the receiving party, and the functional interface IRP version information, the data definition IRP version information, and the NRM IRP version information supported by the sending party.

Optionally, the managing unit negotiation module sends the IRP version information supported by the managing unit to the managed unit negotiation module via the version negotiation instruction.

Optionally, the managed unit negotiation module is further configured to send the matching IRP version information acquired to the sending party negotiation module.

Optionally, the managing unit negotiation module is further configured to send a version negotiation instruction to the managed unit negotiation module, and the managed unit negotiation module sends the IRP version information supported by the managed unit to a managing unit negotiation module according to the version negotiation instruction.

The present invention further provides an apparatus for interface negotiation in an NMS, includes: a unit for sending IRP version information supported by a first network element of the apparatus, or a unit for receiving IRP version information supported by a second network element from the second network element.

Optionally, the apparatus acquires matching IRP version information based on IRP version information supported by a receiving party and IRP version information supported by a sending party.

It can be seen from the method and apparatus in the above solution, the IRP version information supported by the sending party of the managing unit and managed unit is sent to the receiving party of the managing unit and managed unit, and the receiving negotiation module of the receiving party acquires the matching IRP version information based on the IRP version information supported by the receiving party and the received IRP version information supported by the sending party. Therefore, the matching IRP version information can match functional interface IRP, data definition IRP and NRM IRP of the managing unit with functional interface IRP, data definition IRP and NRM IRP of the managed unit, thus guaranteeing correct interaction of the managing unit and the managed unit, and greatly reducing the influence on the whole NMS after the network is partly updated.

### Brief Description of the Drawings

Figure 1 is a schematic diagram illustrating architecture with multiple management levels.
Figure 2 is a schematic diagram illustrating a relationship between multiple managing units and multiple managed units.
Figure 3 is a schematic diagram illustrating an IRP relationship between a managing unit and a managed unit.
Figure 4 is a schematic diagram illustrating the structure of an apparatus in accordance with an embodiment of the present invention.
Figure 5 is a flow chart of a first embodiment in accordance with an embodiment of the present invention.
Figure 6 is a schematic diagram illustrating a relationship between functional interface IRP versions supported by the managed unit and NRM IRP versions of object sets corresponding to the functional interface IRPs in accordance with a first embodiment of the present invention.
Figure 7 is a schematic diagram illustrating the relationship between functional interface IRP versions supported by the managing unit and NRM IRP versions of object models corresponding to the functional interface IRPs in accordance with the first embodiment of the present invention.
Figure 8 is a schematic diagram illustrating the structure of the apparatus in accordance with the first embodiment of the present invention.
Figure 9 is a schematic diagram illustrating a flow chart in accordance with a second embodiment of the present invention.
Figure 10 is a schematic diagram illustrating the structure of the apparatus in accordance with the second embodiment of the present invention.

### Detailed Description of the Invention

In order to make the technical schemes and merits of the present invention clearer, embodiments of the present invention are hereinafter given.

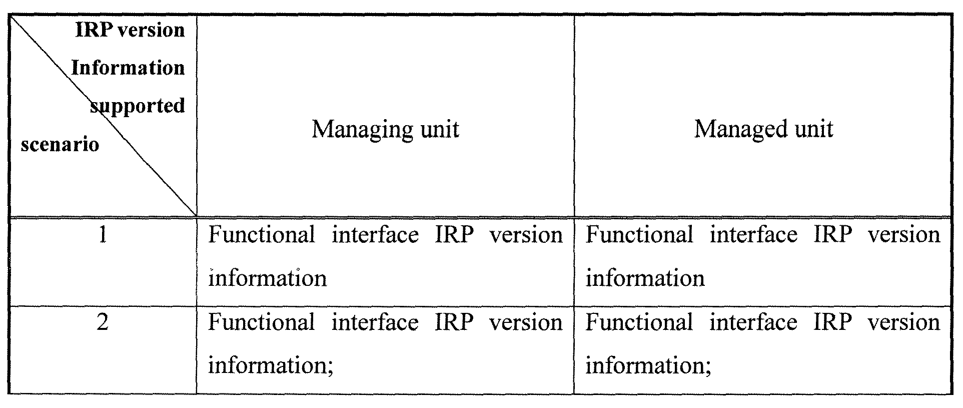

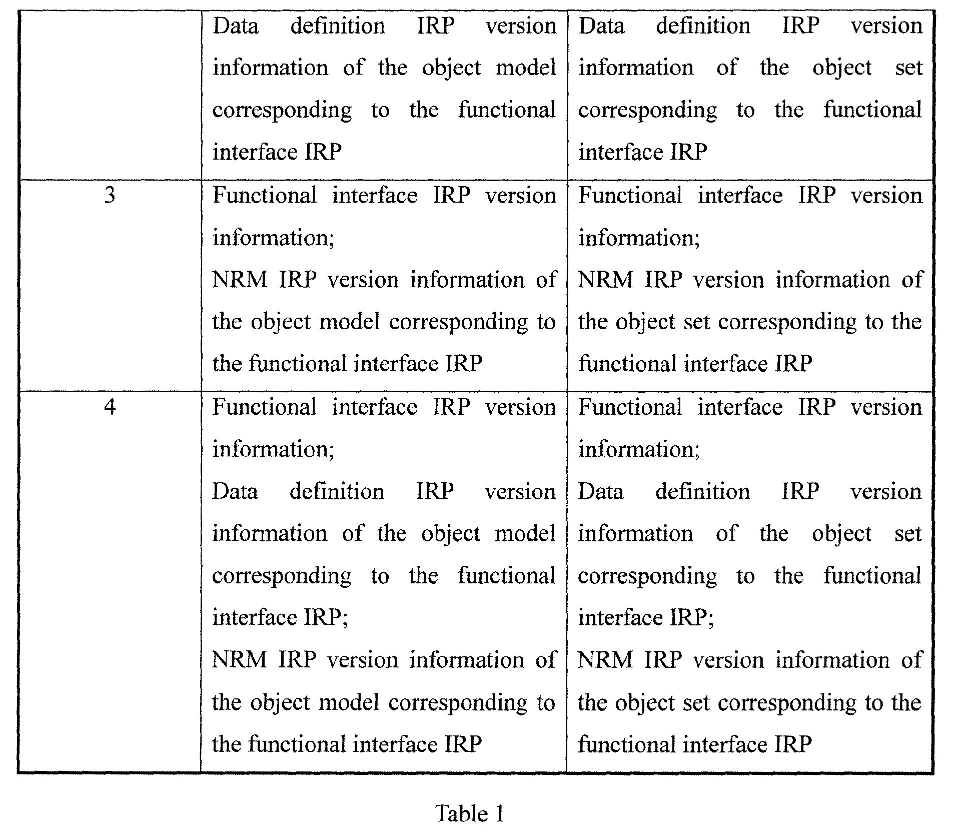

Referring to table 1, the IRP version information supported by the managing unit and the managed unit may include the functional interface IRP version information as shown in scenario 1; or the functional interface IRP version information supported and the data definition IRP version information of the object set corresponding to the functional interface IRP by the managed unit, and the functional interface IRP version information and the data definition IRP version information of the object model corresponding to the functional interface IRP supported by the managing unit as shown in scenario 2; or the functional interface IRP version information and the NRM IRP version information of the object set corresponding to the functional interface IRP supported by the managed unit, and the functional interface IRP version information and NRM IRP version information of the object model corresponding to the functional interface IRP supported by the managing unit as shown in scenario 3; or the functional interface IRP version information, data definition IRP version information of the object set corresponding to the functional interface IRP and NRM IRP version information of the object set corresponding to the functional interface IRP supported by the managed unit, and functional interface IRP version information, data definition IRP version information of the object model corresponding to the functional interface IRP and NRM IRP version information of the object model corresponding to the functional interface IRP supported by the managing unit as shown in scenario 4.

According to the embodiment of the present invention, the managing unit and managed unit may respectively serve as a sending party and a receiving party, or a receiving party and a sending party. During the procedure of interface negotiation, the sending party sends the IRP version information supported by the sending party to the receiving party and the receiving party acquires matching IRP version information base on the IRP version information supported by the receiving party and the received IRP version information supported by the sending party.

As shown in Figure 4, the apparatus in accordance with the embodiment of the present invention includes a sending party negotiation module located in the sending party and a receiving party negotiation module located in the receiving party. The sending party negotiation module is configured to send the IRP version information supported by the sending party to the receiving party The receiving party negotiation module is configured to receive the IRP version information supported and sent by the sending party and acquire the matching IRP version information based on the IRP version information supported by the receiving party and the IRP version information supported by the sending party.

The receiving party negotiation module may include an interface module and a matching module. The interface module is configured to receive the IRP version information supported and sent by the sending party and forwarding the IRP version information supported by the sending party to the matching module. The matching module is configured to acquire the matching IRP version information based on the IRP version information supported by the receiving party and the IRP version information supported by the sending party.

In dependence on different IRP version information supported by the managing unit and the managed unit, the matching module may further include different matching modules: a first matching module, a second matching module, a third matching module and a fourth matching module. The first matching module is configured to acquire the matching IRP version information based on the IRP version information supported by the managing unit and the IRP version information supported by the managed unit in accordance with the scenario 1 in Table 1. The second matching module is configured to acquire the matching IRP version information based on the IRP version information supported by the managing unit and the IRP version information supported by the managed unit in accordance with the scenario 2 in Table 1. The third matching module is configured to acquire the matching IRP version information based on the IRP version information supported by the managing unit and the IRP version information supported by the managed unit in accordance with the scenario 3 in Table 1. The fourth matching module is configured to acquire the matching IRP version information based on the IRP version information supported by the managing unit and the IRP version information supported by the managed unit in accordance with the scenario 4 in Table 1.

According to a first embodiment of the present invention, the sending party is the managed unit and the receiving party is the managing unit. The receiving party, i.e., the managing unit, acquires the matching IRP version information based on the IRP version information supported by the managing unit and the IRP version information supported by the managed unit. In the first embodiment, scenario 3 in Table 1 is taken as an example.

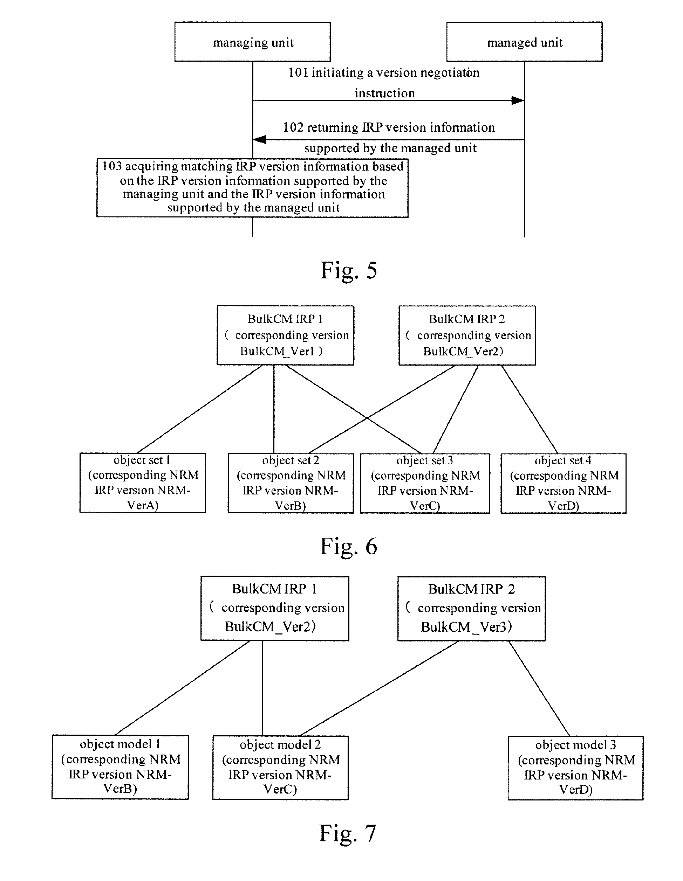

As shown in Figure **5,** a method according to the first embodiment includes:

In **101:** A managing unit sends a version negotiation instruction to a managed unit.

In **102:** In response to receiving the version negotiation instruction sent by the managing unit, the managed unit sends IRP version information supported by the managed unit to the managing unit according to the version negotiation instruction.

The IRP version information supported by the managed unit includes the functional interface IRP version information and NRM IRP version information of the object set corresponding to the functional interface IRP. The managed unit may send the functional interface IRP version information and NRM IRP version information of the object set corresponding to the functional interface IRP to the managing unit simultaneously. Also, the managed unit may send the functional interface IRP version information and NRM IRP version information of the object set corresponding to the functional interface IRP to the managing unit one by one.

In **103:** The managing unit acquires the matching IRP version information based on the IRP version information supported by the managing unit and the IRP version information supported by the managed unit, upon receiving the IRP version information supported and sent by the managed unit.

Apparatus of different manufactures may adopt different schemes to acquire the matching IRP version information based on the IRP version information supported by the managing unit and the IRP version information supported by the managed unit. Hereinafter one scheme for acquiring the matching IRP version information is described as an example.

Figure 6 shows the functional interface IRP version information and the NRM IRP version information of object sets corresponding to the functional interface IRPs supported by the managed unit.

With reference to Table 2, the functional interface IRPs supported by the managed unit include BulkCM IRP and BulkCM IRP2. The BulkCM IRP1 version information is presented by BulkCM_Ver1. The NRM IRP version information of object sets corresponding to the BulkCM IRP1 includes NRM_VerA of object set 1, NRM_VerB of object set 2, and NRM_VerC of object set 3. The BulkCM IRP2 version information is presented by BulkCM_Ver2. The NRM IRP version information of object sets corresponding to the BulkCM IRP2 includes NRM_VerB of object set 2, NRM_VerC of object set 3 and NRM_VerD of object set 4.

**Table 2**

| Functional interface IRP | Version information | NRM IRP of an object set | Version information |
|---|---|---|---|
| BulkCM IRP1 | BulkCM_Ver1 | Object set 1 | NRM_VerA |
| | | Object set 2 | NRM_VerB |
| | | Object set 3 | NRM_VerC |
| BulkCM IRP2 | BulkCM_Ver2 | Object set 2 | NRM_VerB |
| | | Object set 3 | NRM_VerC |
| | | Object set 4 | NRM_VerD |

Figure 7 shows the functional interface IRP version information and the NRM IRP version information of object models corresponding to the functional interface IRPs supported by the managing unit, wherein the object models are adapted to the object sets of the managed unit.

Referring to Table 3, the functional interface IRPs supported by the managing unit include BulkCM IRP1 and BulkCM IRP2. The BulkCM IRP1 version information is presented by BulkCM_Ver2. The NRM IRP version information of object models corresponding to the BulkCM IRP1 includes NRM_VerB of object model 1 and NRM_VerC of object model 2. The BulkCM IRP2 version information is presented by BulkCM_Ver3. The NRM IRP version information of object models corresponding to the BulkCM IRP2 includes NRM_VerC of object model 2 and NRM_VerD of object model 3.

**Table 3**

| Functional interface IRP | Version information | NRM IRP of an object model | Version information |
|---|---|---|---|
| BulkCM IRP1 | BulkCM_Ver2 | Object model 1 | NRM_VerB |
| | | Object model 2 | NRM_VerC |
| BulkCM IRP2 | BulkCM_Ver3 | Object model 2 | NRM_VerC |
| | | Object model 3 | NRM_VerD |

The managing unit compares the IRP version information supported by the managing unit and the managed unit to acquire the matching IRP version information according to a pre-set matching principle. For example, the managing unit takes the same IRP version information as the matching IRP version information. As shown in Table 4, the same IRP version information includes: BulkCM_Ver2, which is functional interface IRP version information, NRM_VerB and NRM_VerC which are version information corresponding to the NRM IRP of the object set and object model corresponding to the functional interface IRP. Therefore, the managing unit and managed unit can intercommunicate with each other using BulkCM_Ver2 of BulkCM IRP and NRM_VerB when the managing unit and managed unit are objects within the object set 2, and/or, using BulkCM_Ver2 of BulkCM IRP and NRM_VerC when the managing unit and managed unit are objects within the object set 3.

| IRP | Version information |
|---|---|
| BulkCM IRP | BulkCM_Ver2 |
| Object set 2 corresponding to object model 1 | NRM_VerB |
| Object set 3 corresponding to object model 2 | NRM_VerC |

### Table 4

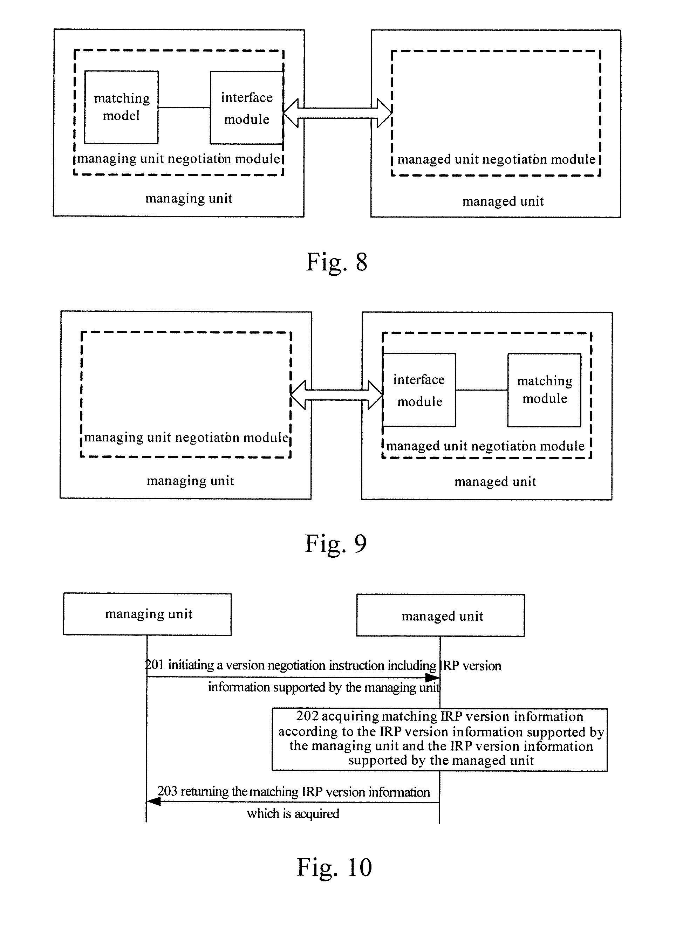

The above method described in the first embodiment of the present invention may be implemented by the apparatus shown in Figure **8.** With reference to Figure **8,** the apparatus may include a managing unit negotiation module located in the managing unit and a managed unit negotiation module located in the managed unit.

The managing unit negotiation module is configured to send a version negotiation instruction to the managed unit, receive IRP version information supported and sent by the managed unit, and acquire matching IRP version information based on the IRP version information supported by the managing unit and the IRP version information supported and sent by the managed unit.

The managing unit negotiation module may include an interface module and a matching module which connect to each other. The interface module is configured to send the version negotiation instruction to the managed unit, receive the IRP version information supported and sent by the managed unit, and forward the received IRP version information to the matching module. The matching module is configured to acquire the matching IRP version information based on the IRP version information supported by the managing unit and the IRP version information supported and sent by the managed unit. The matching module may include a third matching module configured to acquire the matching IRP version information based on the IRP version information supported by the managing unit and the IRP version information supported by the managed unit, as the IRP version information supported by the managing unit and the IRP version information supported by the managed unit are based on the scenario 3 in Table 1.

The managed unit negotiation module located in the managed unit is configured to receive the version negotiation instruction sent by the managing unit and to send the IRP version information supported by the managed unit to the managing unit according to the version negotiation instruction.

In a second embodiment of the present invention, the sending party is the managing unit and the receiving party is the managed unit. The managed unit acquires the matching IRP version information based on related information. In the second embodiment, the scenario 3 in Table 1 is taken as an example.

As shown in Figure **9,** a method according to the second embodiment includes:

In **201:** A managing unit sends to a managed unit a version negotiation instruction carrying IRP version information supported by the managing unit.

In **202:** In response to receiving the version negotiation instruction from the managing unit, the managed unit acquires the matching IRP version information based on the IRP version information supported by the managed unit and the IRP version information supported by the managing unit carried in the version negotiation instruction.

Apparatus of different manufactures may adopt different schemes to acquire the matching IRP version information based on the IRP version information supported by the managing unit and the IRP version information supported by the managed unit. The matching IRP version information may be acquired in the second embodiment using a similar scheme as that of the first embodiment which will not be detailed here.

In **203:** The managed unit may further send the matching IRP version information to the managing unit.

The method according to the second embodiment can be implemented using the apparatus shown in Figure **10.** With reference to Figure **10,** the apparatus includes a managing unit negotiation module located in the managing unit, and a managed unit negotiation module located in the managed unit.

The managing unit negotiation module is configured to send to the managed unit a version negotiation instruction carrying IRP version information supported by the managing unit.

The managed unit negotiation module located in the managed unit is configured to receive the version negotiation instruction sent by the managing unit; acquire the matching IRP version information based on the IRP version information supported and sent by the managed unit and the received IRP version information supported by the managing unit. The managed unit negotiation module may be further configured to send the matching IRP version information to the managing unit negotiation module located in the managing unit.

The managed unit negotiation module may further include an interface module and a matching module which connect to each other. The interface module is configured to receive the version negotiation instruction sent by the managing unit, and forward the IRP version information supported by the managing unit to the matching module. The matching module is configured to acquire the matching IRP version information based on the IRP version information supported and sent by the managed unit and the received IRP version information supported by the managing unit. The matching module may be further configured to send the matching IRP version information acquired to the interface module; then the interface module sends the matching IRP version information to the managing unit negotiation module located in the managing unit. The matching module may further include a third matching module configured to acquire the matching IRP version information based on the IRP version information supported by the managing unit and the IRP version information supported by the managed unit, as the IRP version information supported by the managing unit and the IRP version information supported by the managed unit are based on the scenario 3 in Table 1.

The present invention is described above with reference to particular embodiments, and it will be readily apparent to those skilled in the art that it is possible to embody the present invention in forms other than those described above. The particular embodiments described above are merely illustrative and should not be considered restrictive in any way. The scope of the present invention is determined by the following claims, and all variations, modifications and equivalents that fall within the range of the claims are intended to be embraced therein.

## Claims

1. A method for interface negotiation in a Network Management System (NMS), comprising:
sending, by a sending party in an NMS, Integration Reference Point (IRP) version information supported by the sending party to a receiving party in the NMS; and
acquiring, by the receiving party, matching IRP version information, based on IRP version information supported by the receiving party and the IRP version information supported by the sending party.

2. The method of claim 1, wherein the sending party is a managed unit, and the receiving party is a managing unit.

3. The method of claim 1, wherein the sending party is a managing unit and the receiving party is a managed unit.

4. The method of claim 2 or 3, wherein the IRP version information supported by the managed unit comprises functional interface IRP version information; and
the IRP version information supported by the managing unit comprises functional interface IRP version information.

5. The method of claim 4, wherein the IRP version information supported by the managed unit further comprises data definition IRP version information; and
the IRP version information supported by the managed unit further comprises data definition IRP version information.

6. The method of claim 4, wherein the IRP version information supported by the managed unit further comprises Network Resource Model (NRM) IRP version information; and
the IRP version information supported by the managing unit further comprises NRM IRP version information.

7. The method of claim 1, further comprising:
acquiring, by the receiving party, the matching IRP version information by comparing the IRP version information supported by the receiving party and the IRP version information supported by the sending party based on a pre-set matching principle.

8. The method of claim 2, further comprising:
sending, by the managing unit, a version negotiation instruction to the managed unit; and
sending, by the managed unit, the IRP version information supported by the sending party to the managing unit.

9. The method of claim 2, further comprising:
sending, by the managed unit, at least one IRP version information supported by the managed unit to the managing unit simultaneously.

10. The method of claim 3, further comprising:
sending, by the managing unit, the IRP version information supported by the managing unit to the managed unit via a version negotiation instruction.

11. The method of claim 3, further comprising:
sending, by the managed unit, the matching IRP version information to the managing unit.

12. An apparatus for interface negotiation in a Network Management System (NMS), comprising:
a sending party negotiation module located in a sending party in an NMS, the sending party negotiation module being configured to send Integration Reference Point (IRP) version information supported by the sending party to a receiving party in the NMS; and
a receiving party negotiation module located in the receiving party, the receiving party negotiation module being configured to receive the IRP version information supported and sent by the sending party and acquire matching IRP version information based on IRP version information supported by the receiving party and the IRP version information supported by the sending party.

13. The apparatus of claim 12, wherein the sending party is a managing unit, and the receiving party is a managed unit.

14. The apparatus of claim 12, wherein the sending party is a managed unit, and the receiving party is a managing unit.

15. The apparatus of claim 13 or 14, wherein the receiving party negotiation module comprises an interface module and a matching module; wherein
the interface module is configured to receive the IRP version information supported and sent by the sending party and forward the received IRP version information supported by the sending party to the matching module; and
the matching module is configured to receive the IRP version information supported by the sending party from the interface module, and acquire the matching IRP version information based on IRP version information supported by the receiving party and the IRP version information supported by the sending party.

16. The apparatus of Claim 15, wherein the matching module comprises:
a first matching module, configured to acquire the IRP version information, based on functional interface IRP version information supported by the receiving party and the functional interface IRP version information supported by the sending party.

17. The apparatus of Claim 15, wherein the matching module comprises:
a second matching module, configured to acquire the matched IRP version information based on the functional interface IRP version information and data definition IRP version information supported by the receiving party, and the functional interface IRP version information and the data definition IRP version information supported by the sending party.

18. The apparatus of Claim 15, wherein the matching module comprises:
a third matching module, configured to acquire the matched IRP version information based on the functional interface IRP version information and Network Resource Model (NRM) IRP version information supported by the receiving party, and the functional interface IRP version information and the NRM IRP version information supported by the sending party.

19. The apparatus of Claim 15, wherein the matching module comprises:
a fourth matching module, configured to acquire the matched IRP version information based on the functional interface IRP version information, the data definition IRP version information, and the NRM IRP version information supported by the receiving party, and the functional interface IRP version information, the data definition IRP version information, and the NRM IRP version information supported by the sending party.

20. The apparatus of claim 13, wherein the managing unit negotiation module sends the IRP version information supported by the managing unit to the managed unit negotiation module via the version negotiation instruction.

21. The apparatus of claim 13, wherein the managed unit negotiation module is further configured to send the matching IRP version information acquired to the sending party negotiation module.

22. The apparatus of claim 14, wherein the managing unit negotiation module is further configured to send a version negotiation instruction to the managed unit negotiation module, and
the managed unit negotiation module sends the IRP version information supported by the managed unit to a managing unit negotiation module according to the version negotiation instruction.

23. An apparatus for interface negotiation in a Network Management System (NMS), comprising:
a unit for sending IRP version information supported by a first network element of the apparatus, or
a unit for receiving IRP version information supported by a second network element from the second network element.

24. The apparatus of claim 23, wherein the apparatus acquires matching IRP version information based on IRP version information supported by a receiving party and IRP version information supported by a sending party.
